# EUROPÄISCHE PATENTANMELDUNG

(11) **EP 0 908 571 A2**
(43) Veröffentlichungstag der Anmeldung: **14.04.1999**
(21) Anmeldenummer: 98890236.7
(22) Anmeldetag: 11.08.1998
(51) Int. Cl.: E04C 2/16, E04B 1/80

(54) **Dämmaterial**

(30) Priorität: 07.10.1997 AT 1694/97
(71) Anmelder: Peter Seppele Gesellschaft m.b.H., 9710 Feistritz/Drau (AT)
(72) Erfinder: Peter Seppele, 9710 Feistritz/Drau (AT)
(74) Vertreter: Beer, Manfred, Dipl.-Ing.

(57) **Zusammenfassung**

Ein Dämmaterial für die Wärmedämmung und/oder die Trittschalldämmung enthält aus zu Pellets gepreßtes Papier und/oder pflanzliche Fasern, wobei die Pellets einen Durchmesser von beispielsweise 4 bis 6 mm und eine Länge von beispielsweise 5 bis 10 mm aufweisen.

Die Pellets können mit einem Harz beschichtet sein. Es ist überdies möglich, die Pellets gegen Schimmelbildung mit Borax zu tränken und/oder für den Brandschutz mit Borsäuregranulat zu vermengen.

## Beschreibung

Die Erfindung betrifft ein Dämmaterial.

Aus der DE 195 13 770 A ist ein Bauelement bekannt, das aus einer Kernschicht aus granulierten Papierkügelchen und aus einer die Kernschicht allseitig umgebenden Deckschicht aus Altpapier und/oder der Pappe besteht. Damit das Bauelement der DE 195 13 770 A Druckbelastungen standhalten kann, sind in der Kernschicht (aus granulierten Papierkügelchen) Lamellen angeordnet, die quer zur Flächenerstreckung des Bauelementes ausgerichtet sind.

In der GB 1 118 221 A wird ein zusammengesetzter Werkstoff vorgestellt, der neben einem geschäumten, thermoplastischen Kunststoff noch Faseranteile und ein Bindemittel enthält. In der GB 1 118 221 A sind als Beispiele für Faseranteile Zellulosefasern genannt. Papier als Bestandteil des Werkstoffes ist in der GB 1 118 221 A nicht erwähnt.

Aufgabe der Erfindung ist es, ein Material der eingangs genannten Gattung zur Verfügung zu stellen, das billig und einfach herzustellen ist und das die für den beabsichtigten Einsatzzweck erforderlichen Eigenschaften besitzt. Insbesondere soll das erfindungsgemäße Dämmaterial für Zwecke der Wärme- und Schalldämmung, aber insbesondere auch für die Trittschalldämmung, geeignet sein.

Erfindungsgemäß wird diese Aufgabe mit einem Dämmaterial mit den Merkmalen des Anspruches 1 gelöst.

Wesentlicher Unterschied zwischen dem Bauelement der DE 195 13 770 A und dem Dämmaterial der Erfindung ist es, daß bei ersterem die granulierten Papierkügelchen allseitig von einer Deckschicht umgeben sind, so daß ein beispielsweise als Dachelement verwendbares Bauelement erhalten wird. Hingegen besteht das erfindungsgemäße Dämmaterial aus zu Pellets gepreßtem Papier, aus zu Pellets gepreßten, pflanzlichen Fasern, aus einem Gemenge aus Pellets aus Papier und aus Pellets aus pflanzlichen Fasern, oder aus einem zu Pellets gepreßtem Gemenge aus Papier und pflanzlichen Fasern. Die Pellets können lose als Schüttmaterial eingebracht werden. Dadurch, daß bei der Erfindung das Papier und/oder die pflanzlichen Fasern zu Pellets gepreßt sind, handelt es sich um ein für sich druckstabiles Material, das auch ohne die in der DE 195 13 770 A vorausgesetzte Umhüllung durch Deckschichten eingesetzt werden kann und das hinreichend druckfest ist, um auch ohne zusätzliche Maßnahmen den Belastungen standzuhalten, denen es ausgesetzt ist, wenn es beispielsweise in Fußböden als Dämmmaterial eingesetzt wird.

Der Hinweis auf Pellets in der GB 1 118 221 A auf Seite 2, Zeilen 46 bis 48 ist so zu verstehen, daß der Kombinationswerkstoff gemäß der GB 1 118 221 A zu Pellets zerschnitten werden kann. Erfindungsgemäß ist aber vorausgesetzt, daß das Dämmaterial aus zu Pellets gepreßtem Papier und/oder Fasermaterial besteht. Darüber hinaus ist erfindungsgemäß vorausgesetzt, daß das Dämmaterial, abgesehen von einer allfälligen Beschichtung mit einem Harz, ausschließlich aus Papier und/oder Fasern besteht und keine Kunststoffanteile enthält.

Bevorzugte und vorteilhafte Ausgestaltungen der Erfindung sind Gegenstand der Unteransprüche.

Durch die Erfindung wird ein Dämmaterial zur Verfügung gestellt, das aus Abfallstoffen hergestellt werden kann. Beispielsweise können Altpapier oder pflanzliche Faserprodukte, wie Hanf, Flachs und Stroh, zu dem erfindungsgemäßen Dämmaterial verarbeitet werden. Dadurch, daß die Rohstoffe (Altpapier oder pflanzliche Faserprodukte) vorher zerkleinert und in einer Pelletierpresse zu Pellets verarbeitet werden, ergeben sich vorteilhafte Eigenschaften des erfindungsgemäßen Dämmaterials.

Bei der Erfindung ist es möglich, die Pellets, insbesondere wenn sie für die Trittschalldämmung im Fußboden eingesetzt werden, mit einem Naturharz zu beschichten, so daß eine wasserabweisende Schicht vorliegt und die Adhäsion zwischen den einzelnen Pellets des Dämmaterials verbessert wird.

Wenn das erfindungsgemäße Dämmaterial für die Dämmung von Wänden oder Dachschrägen verwendet wird, ist eine Beschichtung mit einem Naturharz nicht unbedingt erforderlich.

Das erfindungsgemäße Dämmaterial hat den Vorteil, daß als Rohstoff (Alt-)Papier und/oder pflanzliche Faserstoffe eingesetzt werden können. Die erfindungsgemäßen zum Schallschutz und/oder zur Dämmung verwendeten Pellets können beim Abbrechen von Altbauten mit Industriesaugern aus Fußböden abgesaugt und in Neubauobjekten wieder verwendet werden. Weiters ist es möglich, das erfindungsgemäße Dämmaterial staubfrei mit Einblasmaschinen in Fußböden und Wände mit Hilfe eines Luftstromes einzutragen, so daß sich eine erhebliche Arbeitserleichterung ergibt.

In einem Arbeitsgang erreicht man beispielsweise durch Abziehen mit einer Waaglatte und Verdichten einen guten Schallschutz (Masse 650 kg/m³) und einen sehr guten Wärmeschutz λ R = 0,1 W/mK bei hoher Druckfestigkeit, was für Fußböden als Trittschalldämmung vorteilhaft ist.

Schlußendlich handelt es sich bei dem erfindungsgemäßen Dämmaterial um einen biologischen Werkstoff mit guter Recyclingfähigkeit.

Zum Herstellen von erfindungsgemäßem Dämmaterial werden (Alt-)Papier oder pflanzliche Faserprodukte, wie Hanf, Flachs und Stroh zum Zwecke der Wärme- und Schalldämmung in einer Hammermühle vorzerkleinert (Abmessungen der Teilchen in der Größenordnung von 20 mm) und in einer Pelletierpresse zu Pellets beispielsweise mit einem Durchmesser von 4 bis 6 mm und einer Länge von 5 bis 10 mm verarbeitet. Die Pellets können mit Naturharz besprüht werden, falls dies gewünscht wird.

Als Ausgangsmaterial kann Altpapier aus der Haushaltssammlung oder von Gewerbebetrieben verwendet werden. Als pflanzliche Fasern werden Zellulosefasern, wie Hanf, Flachs oder Stroh bevorzugt.

Den erfindungsgemäßen Pellets kann gegen Schimmelbildung bis zu 5 Gew.-% Borax und für den Brandschutz bis zu 5 Gew.-% Borsäuregranulat beigemengt werden. Dies erfolgt vorteilhaft vor dem Pelletieren in der Pelletierpresse.

Es empfiehlt sich, das vorzerkleinerte, mit Borsäure und/oder Borsäuregranulat imprägnierte Material in der Pelletierpresse durch hohen Druck zu Pellets zu verpressen, die Pellets in einem Kühler abzukühlen und dann in einer Sprühanlage mit einem Naturharz (z.B. Fichtenharz der Type Sakotop FL 10/A) zu beschichten.

Die erfindungsgemäßen Wärmedämmstoffe zeichnen sich auch durch gute Brandschutzwirkung aus, d.h. sie sind nach Brennbarkeitsklasse B1 "schwer brennbar".

Das erfindungsgemäße Dämmaterial kann mit annähernd 10 % Naturharz beschichtet sein. Als Naturharz bietet sich neben Kiefernöl auch das oben erwähnte Fichtenharz an.

Wenn aus Zellulosefasern hergestellte Pellets des erfindungsgemäßen Dämmaterials wie oben erwähnt mit Borsäuregranulat imprägniert sind (5 Gew.-%) ergibt sich bei einer durchschnittlichen Rohdichte von etwa 770 kg/m³ eine Brennbarkeitsklasse B1 (schwer brennbar) gemäß ÖNORM B 3800 Teil 1, Ausgabe 1988.

Ein aus Altpapier hergestelltes erfindungsgemäßes Dämmaterial mit einer mittleren Dichte von 650 kg/m³ besitzt eine Wärmeleitfähigkeit für eine trockene Probe bei 10°C Mitteltemperatur (λ 10µ) von 0,0977 W/mK. Der Wasserdampf-Diffusionswiderstand gemäß ÖNORM B 6016 im Klima C (23-0/100), bestimmt an jeweils drei Proben des erfindungsgemäßen Dämmaterials beträgt annähernd 0,140 x 10⁻⁶ kg/(m² · h · Pa) entsprechend einer Wasserdampfdiffusionswiderstandszahl µ von rund 2,30 - 2,40.

Mit Kiefernöl-Harz (Anteil 10 Masse-%) beschichtete, aus Papierflocken hergestellte Pellets wurden hinsichtlich der Eigenfestigkeit, Schüttdichte, Kornrohdichte, Kornzusammensetzung und Staubanteil überprüft. Dabei ergaben sich folgende Ergebnisse:

Die Eigenfestigkeit (Druckspannung bei 20 cm Stauchung) des geprüften Dämmaterials (Pellets Korngröße maximal 8 mm) beträgt 1,32 N/mm².

Die Schüttdichte (nach ÖNORM B 3233/1974) beträgt im Mittel 569 kg/m³.

Die Kornrohdichte (ermittelt nach ÖNORM B 3233/1974) liegt im Mittel bei 1534 kg/m³.

Die Kornzusammensetzung wurde sowohl im Anlieferungszustand als auch nach durchgeführter Eigenfestigkeitsprüfung gemäß ÖNORM 3304 überprüft, nachdem das Prüfmaterial vorher bei +80°C konstant geetrocknet wurde. Dabei zeigt sich, daß der Kornaufbau des erfindungsgemäßen Dämmaterials praktisch gleich blieb und ein Einfluß auf die Korngröße, bedingt durch die 20 %-ige Stauchung nicht nachweisbar ist.

Der Staubanteil (Korngröße ≤ 0,063 mm) lag zwischen 0,1 bis 0,2 Masse-%.

Vorstehende Beschreibung zeigt, daß das erfindungsgemäße Dämmaterial aus Pellets aus (Alt)Papier und/oder pflanzlichen Fasern für die Wärme- und Schalldämmung geeignet ist. Die Pellets sind insbesondere zylinderförmig, beispielsweise mit einem Durchmesser von 5 mm und einer durchschnittlichen Länge von 10 mm. Für bestimmte Anwendungen (z.B. druckbelastbare Trittschalldämmung) können die Pellets mit Naturharzen behandelt werden, um Wasser abzuweisen und die Adhäsion zwischen den einzelnen Dämmpellets zu verbessern.

Durch das Beschichten bzw. Tränken der Pellets mit Naturharzen wird die Druckbelastbarkeit erhöht, und der Schallabsorptionsgrad verbessert. Die solcherarts behandelten Dämmpellets können in Hohlräume (Wände, Decken, Dächer) oder unter einem Naß- oder Trockenestrich zum Zwecke der Wärme- und Schalldämmung eingebracht werden.

Zusammenfassend kann ein bevorzugtes Ausführungsbeispiel einer erfindungsgemäßen Dämmplatte wie folgt beschrieben werden:

Ein Dämmaterial, das für die Wärmedämmung und/oder die Trittschalldämmung eingesetzt werden kann, enthält Pellets mit Zylinderform aus gepreßtem Papier und/oder pflanzlichen Fasern. Die Pellets haben einen Durchmesser von beispielsweise 4 bis 6 mm und eine Länge von beispielsweise 5 bis 10 mm. Insbesondere beim Verwenden des Dämmaterials als Trittschalldämmung können die Pellets mit einem Naturharz, wie Fichtenharz oder Kiefernöl beschichtet sein. Als Papier, das im erfindungsgemäßen Dämmaterial zu Pellets gepreßt enthalten ist, bewährt sich auch auf Abmessungen von etwa 20 mm vorzerkleinertes Altpapier. Als pflanzliche Fasern bewähren sich insbesondere Zellulosefasern, wie Fasern von Hanf, Flachs und/oder Stroh.

## Patentansprüche

1. Dämmaterial, dadurch gekennzeichnet, daß es aus zu Pellets gepreßtem Papier und/oder pflanzlichen Fasern besteht.

2. Dämmaterial nach Anspruch 1, dadurch gekennzeichnet, daß die Pellets aus auf Abmessungen von annähernd 20 mm vorzerkleinertem Papier bestehen.

3. Dämmaterial nach Anspruch 1 oder 2, dadurch gekennzeichnet, daß die Pellets annähernd zylinderförmig sind.

4. Dämmaterial nach einem der Ansprüche 1 bis 3, dadurch gekennzeichnet, daß die Pellets einen Durchmesser von 4 bis 6 mm aufweisen.

5. Dämmaterial nach einem der Ansprüche 1 bis 4, dadurch gekennzeichnet, daß die Pellets eine Länge von 5 bis 10 mm aufweisen.

6. Dämmaterial nach einem der Ansprüche 1 bis 5, dadurch gekennzeichnet, daß die Pellets mit einem Harz beschichtet sind.

7. Dämmaterial nach Anspruch 6, dadurch gekennzeichnet, daß die Pellets mit einem Naturharz beschichtet sind.

8. Dämmaterial nach Anspruch 6 oder 7, dadurch gekennzeichnet, daß die Beschichtung mit Harz bis zu 10 Gew.-% beträgt.

9. Dämmaterial nach einem der Ansprüche 6 bis 8, dadurch gekennzeichnet, daß die Beschichtung mit Harz nach dem Verpressen des Papier und/oder der Fasern zu Pellets erfolgt.

10. Dämmaterial nach einem der Ansprüche 6 bis 9, dadurch gekennzeichnet, daß das Naturharz Fichtenharz oder Kiefernöl ist.

11. Dämmaterial nach einem der Ansprüche 1 bis 10, dadurch gekennzeichnet, daß die Pellets gegen Schimmelbildung mit Borax getränkt sind.

12. Dämmaterial nach einem der Ansprüche 1 bis 11, dadurch gekennzeichnet, daß die Pellets für den Brandschutz mit Borsäuregranulat vermengt werden.

13. Dämmaterial nach Anspruch 1 bis 12, dadurch gekennzeichnet, daß die pflanzlichen Fasern Zellulosefasern, wie Hanf, Flachs und/oder Stroh, sind.
